# EUROPEAN PATENT APPLICATION

(11) **EP 0 640 930 A2**
(43) Date of publication of application: **01.03.1995**
(21) Application number: 94305952.7
(22) Date of filing: 11.08.1994
(51) Int. Cl.: G06F 15/80, G06F 9/46

(54) **A multiprocessor system and a method of controlling such a system**

(30) Priority: 27.08.1993 JP 212432/93
(71) Applicant: International Business Machines Corporation, Armonk, N.Y. 10504 (US)
(72) Inventor: Kawase, Kei, Sagamihara-shi, Kanagawa-ken (JP); Moriyama, Takao, Yokohama-shi, Kanagawa-ken (JP); Ono, Makoto, Yokohama-shi, Kanagawa-ken (JP)
(74) Representative: Burt, Roger James, Dr.

(57) **Abstract**

The present invention provides a multiprocessor system for processing instruction arrays comprising attribute setting instructions and tasks. When an attribute setting instruction is transmitted to the system, it is first written into a first TSL buffer. Then a comparator determines the difference between the corresponding addresses in the first TSL buffer and a second TSL buffer, and a TAG circuit stores the changed parts. When a task, or primitive, is allotted, the contents of the TAG circuit are referenced and only the changed parts are copied from the first to second TSL buffer. Then the second TSL buffer is locked to retain the instantaneous value of the TSL. An MPU performs drawing with reference to the snapshot of the TSL retained by the second TSL buffer.

By the above technique a graphic system according to the invention can use a multiprocessor to perform fast parallel processing by efficiently assigning drawing instructions to each node, since a TSL snapshot at any time can be obtained quickly for use.

## Description

The present invention relates to a multiprocessor system which assigns instructions sent sequentially to each processor and executes them in parallel, and a method for controlling such a multiprocessor.

In three-dimensional graphics interfaces such as the Programmer's Hierarchical Interactive Graphics System (PHIGS), data is usually stored in a storage area as a hierarchical structure. Therefore, during drawing, this data structure is evaluated and expanded (traversal) to generate a sequential instruction array, or a display list, which is then sent to a graphic system.

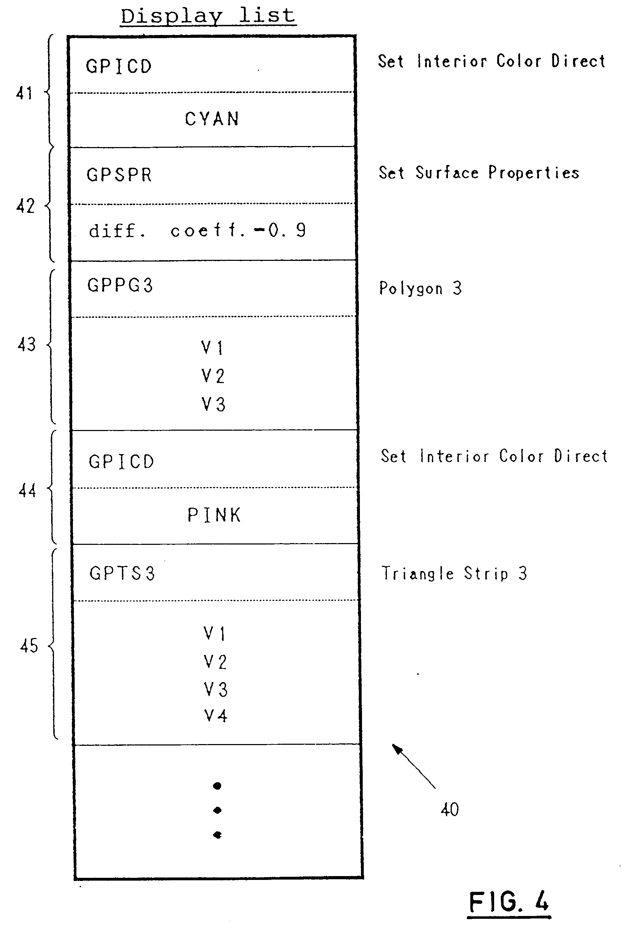

The display list consists of attribute setting instructions and drawing instructions (primitives), as shown in Figure 4. The attribute setting instructions are instructions for the attributes of each primitive, for example, the color, lighting parameter, or transformation matrices to be set, which are shown as symbols 41, 42, and 44 in Figure 4. The primitives are instructions for the drawing of graphic elements such as points, lines, and polygons, and are shown as symbols 43 and 45 in Figure 4.

When an attribute setting instruction is issued, its attribute value is written into the corresponding entry (address) in the storage position in the system referred to as a traversal state list (TSL). When an attribute value is set again for the same attribute, it overwrites the previous entry and the new value is validated. Therefore, the contents of the TSL are changed every time an attribute setting instruction is sent. In addition, drawing is executed with reference to the instantaneous value (snapshot) of the attribute value in the TSL at the time when a primitive is issued. For example, in Figure 4, the attribute value which relates to an interior color instruction effective for the primitive "Polygon3" 43 is the snapshot of that time "CYAN" 41 and not the "PINK" 44 following it in the display list 40.

Since traversal processing itself is sequential, parallel processing cannot be executed for the overall process. However, traversal operations and the processing of primitives sequentially generated during traversal can be executed in parallel. It is efficient, for example, to sequentially assign one processor to each primitive to execute parallel processing because primitives do not affect each other. However, each processor must hold the snapshot of the TSL for the primitive for which it is responsible and ensure that attribute values subsequently issued can be referenced. The reason for this is that if a TSL common to all the processors is provided on a common memory, the TSL must be fixed for a primitive for which a processor is performing drawing, and subsequent attribute setting instructions frequently issued cannot then be executed (that is, processing a sequential instruction array 40 cannot be advanced, preventing parallel processing in primitives).

It is possible, if a TSL common to all the processors is provided on a common memory, for each processor to copy data from the common TSL to its local storage area every time processing for a primitive starts, so that each processor can obtain its desired TSL snapshot. However, the copy operation is a substantial overhead because the TSL typically has a large volume of 1000 bytes or more. Therefore, factors such as competition for buses cause the advantage of the fast parallel processing by the microprocessor to be lost.

It is also possible for attribute setting instructions to be recorded and for each processor to reference the record to determine what attribute value the primitive allotted to the processor corresponds to. However, this method is not very efficient, for the same reason as above.

PUPA 2-279505 discloses a method for pushing and popping the TSL using the line copy of a VRAM. This method allows fast push and pop and can also be used to distribute data sets to a multiprocessor.

However, in order to receive respective data, each microprocessor in a multiprocessor must use a common bus, resulting in a slow transfer.

In addition, it is not known which element in a data set has been changed because the entire TSL is copied at one time. Therefore, it is difficult to cache data sets in a cache built into the microprocessor.

PUPA 5-54004 discloses a multiprocessor system with a plurality of lockable memories for individual element processors (for example, the Triple TSL Store (TTS)). This system can quickly obtain a snapshot at any time to perform parallel processing without much overhead.

However, with this system, the entire contents of the TSL must be copied onto a common bus and broadcast to each TTS when a data set is pushed or popped.

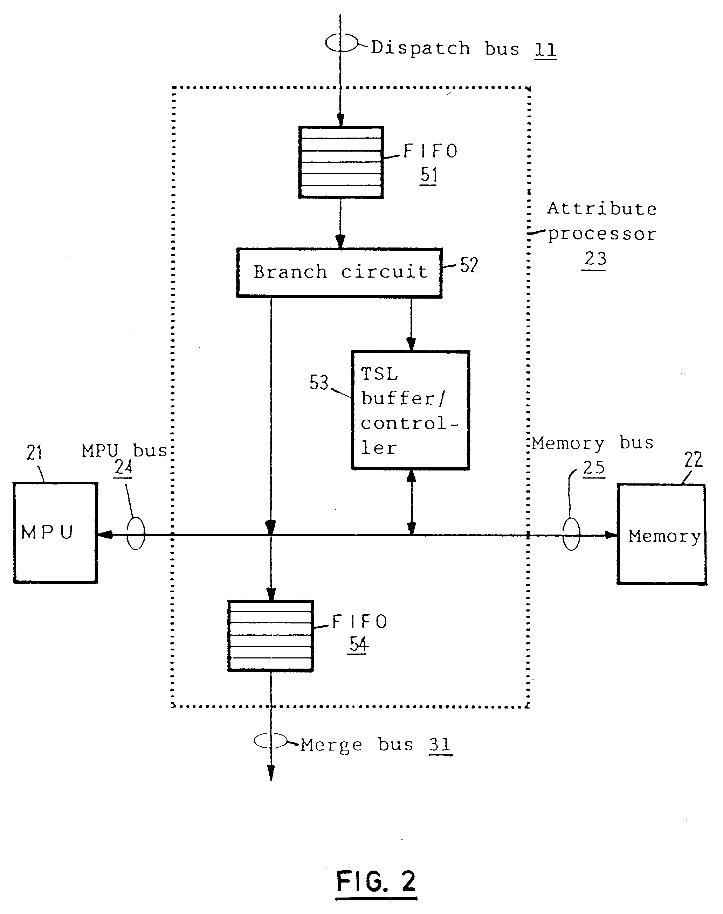

In addition, the execution unit represented by symbol 29 in Figure 2 in PUPA 5-54004 uses a dedicated microprocessor with a built-in TTS (on chip). In fact, however, it is desirable that generic processors are used for the utilization of only the TTS part as an Application Specific Integrated Circuit (ASIC), due to such factors as cost performance.

On the other hand, the effect of the built-in cache in the processor cannot be sufficiently provided if generic processors are used instead of dedicated ones, because the contents of the TSL are copied as a whole from TTS every time its snapshot is taken. Also, communications with the TTS as external chip must then be conducted via a common bus, and transfer speed then requires several CPU clocks. In fact, at least two 4 × 4 matrices (128 bytes) of data must be read from the TSL for ordinary three-dimensional graphics. Therefore, slow transfer prevents fast execution of overall processing.

It is an object of this invention to provide a multiprocessor system such as PHIGS which can execute an instruction array corresponding to data sets sequentially updated by a sequential data array with less overhead than the prior art techniques, and a method for controlling the multiprocessor.

Accordingly the present invention provides a multiprocessor system having a plurality of nodes arranged to execute allotted tasks in parallel, the system comprising: a distribution means for receiving sequentially data sets and tasks, for broadcasting data sets to all of the nodes, and for allotting a task to one of the nodes for processing; an integration means for integrating the results of processing by each node; each node being in a locked state during processing of a task, and comprising: a first temporary storage means for receiving and writing each item of data sent by the distribution means at a corresponding address; a second temporary storage means having the same set of addresses as the first temporary storage means and retaining the instantaneous value of the data set at the time the node entered its locked state; a comparison means for comparing the data stored in the corresponding addresses in the first and second temporary storage means to detect a difference, and a third storage means for storing the addresses at which a difference exists; a task processing means for processing the allotted task with reference to the data set stored in the second storage means and driving the node into an unlocked state when the processing of the task is finished; a storage control means for controlling the referencing of the task processing means to the second temporary storage means, and with reference to the third storage device during the unlocked state copying the data set at an address in the first temporary storage means to the corresponding address in the second temporary storage means for each address where a difference existed.

In preferred embodiments, when copying a data set, the storage control means sends the data set's address to the task processing means, which has a built-in cache memory and invalidates the area of the cache memory that corresponds to the address received by the storage control means.

Viewed from a second aspect the present invention provides a method for controlling a multiprocessor system having a plurality of nodes arranged to execute allotted tasks in parallel, the method comprising the steps of: broadcasting, via a distribution means, a data set received by the multiprocessor system to each node; employing a first temporary storage means in each node to write said data set into a corresponding address; comparing said data set with the data set stored in a corresponding address of a second temporary storage means in each node to detect any difference, associating said difference with the address and storing it in a third storage means in each node; employing the distribution means to receive tasks and to allot a task to one of the nodes; in response to the allotment of the task, causing the allotted node to read from the third storage means the addresses with the difference detected and to copy the data set stored in each such address in the first temporary storage means to the corresponding address in the second temporary storage means; after copying all the addresses with a difference detected is completed, driving the node into a locked state; in response to the locked state, employing a task processing means to process the task with reference to the second temporary storage means; driving the node into an unlocked state when the task processing means finishes processing the task; and employing an integration means to integrate the results of processing by each node.

Preferably, if a node receives a data set from the distribution means whilst in the locked state, the first temporary storage means is employed to write said data set into the corresponding address, said data set is compared with the data set stored in the corresponding address in the second temporary storage means to detect a difference, and said difference is stored with the address in the third storage means, but the data set is not copied from the first to second temporary storage means until the node has been driven into the unlocked state.

In preferred embodiments, the task processing means has a built-in cache memory, and the method comprises the further steps of: when a data set is copied, sending the data set's address to the task processing means; and invalidating the area of the cache memory that corresponds to the address received by the task processing means.

The present invention provides a multiprocessor system which can quickly assign a snapshot at any time of a data set sequentially updated by a sequential data array and execute instructions for each snapshot efficiently and in parallel. Further the invention provides a method for controlling the multiprocessor.

The present invention will be described further, by way of example only, with reference to a preferred embodiment thereof as illustrated in the accompanying drawings, in which:
Figure 1 illustrates an exterior configuration of a graphics system according to a preferred embodiment of the present invention;
Figure 2 illustrates an internal configuration of one node provided in the graphics system of the preferred embodiment;
Figure 3 illustrates a detailed configuration of a TSL buffer/controller included in the node;
Figure 4 illustrates an example of a display list used in the graphics system; and
Figures 5 to 12 illustrate the operation of the graphics system according to the preferred embodiment of the present invention.

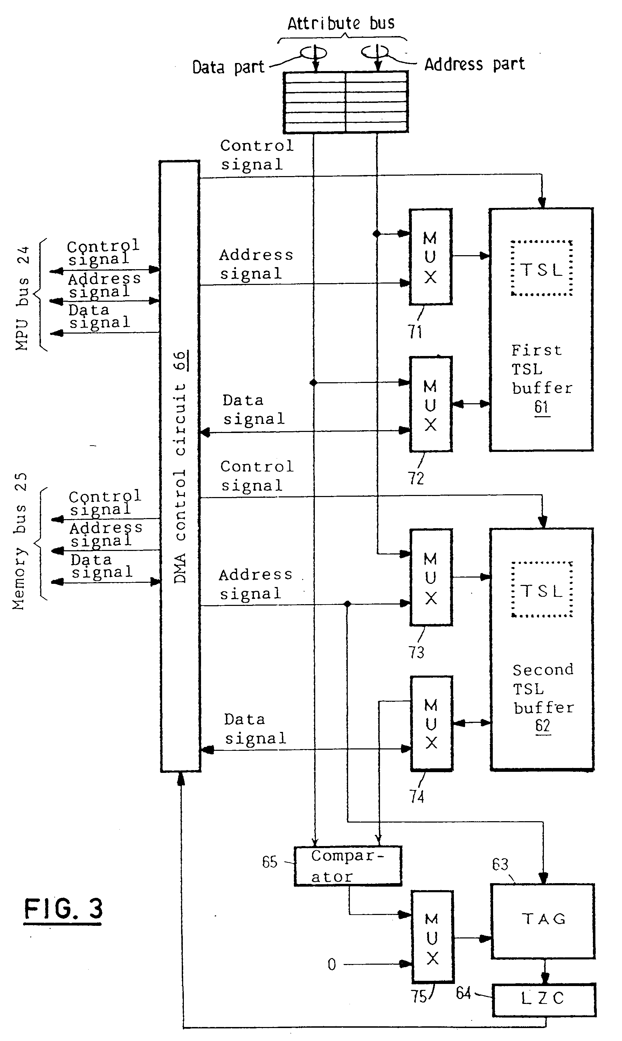

With reference to Figure 3, when an attribute setting instruction is issued as a data set, a current attribute value is copied into a first TSL buffer 61 acting as a first temporary storage means. Next, a comparator 65 is used as a comparison means to compare the current attribute value with an old attribute value stored in the corresponding address in a second TSL buffer 62 (which acts as a second temporary storage means), and the matching or discrepancy of the values is stored in a TAG circuit 63 acting as a differential storage circuit.

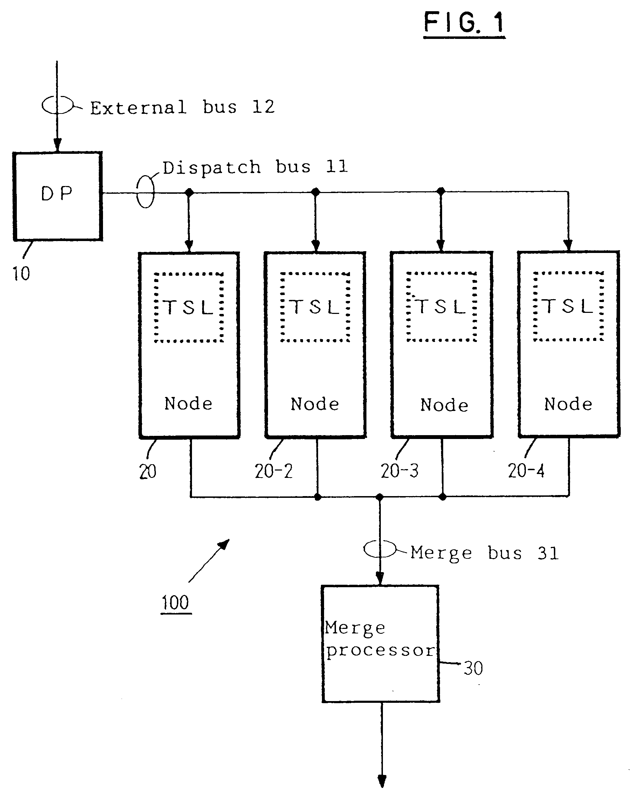

The changed parts of the TSL are sequentially read from the TAG circuit 63 when a primitive is allotted to a node 20 (see Figure 1) as a task. A DMA control circuit 66 acts as a storage control circuit and updates the TSL by copying the attribute values for addresses corresponding to the changed parts from the first TSL buffer 61 to the second TSL buffer 62.

The node 20 enters the locked state when the copy operation ends for all the changed parts. The locked state is not cancelled until an MPU 21 (see Figure 2), which is a task processing means, finishes the task, and during the locked state subsequent attributes do not overwrite the second TSL buffer 62. Therefore, the second TSL buffer 62 can retain the snapshot of the TSL and the MPU 21 can process tasks referencing the snapshot.

This technique allows the TSL to be managed much faster than copying the whole TSL because only the changed parts of the TSL are copied and updated, referencing the contents of the TAG circuit 63.

In addition, a graphics system can use the multiprocessor to perform fast parallel processing by efficiently assigning drawing instructions to each node, because a TSL snapshot at any time can be obtained quickly for use.

In addition, messages for the changed parts are sent to the MPU 21 during copying. The MPU 21 receives such a message and uses a snoop mechanism to invalidate the changed parts in a built-in cache. Therefore, by assigning an address map properly, the TSL can always be retained in the built-in cache to improve the hit ratio of the cache.

The system of the preferred embodiment will now be described in more detail.

Figure 1 shows an exterior configuration of a graphic system for implementing this invention. This system 100 comprises a dispatch processor 10, a plurality of nodes 20, and a merge processor 30.

The graphic system 100 can be installed in a workstation acting as a host, for example, the IBM RISC System/6000 MicroChannel bus (IBM, RISC System/6000, and MicroChannel are Trade Marks of International Business Machines Corporation). The system 100 performs drawing based on a display list (e.g., Figure 4) expanded by the PHIGS in the main memory (not shown) of the workstation.

The dispatch processor 10 is connected to a workstation outside the graphic system 100 (not shown) via an external bus 12 and is interconnected with the input end of each node 20 via a dispatch bus 11. The dispatch processor 10 interprets an instruction array (attribute setting instructions and primitives) supplied sequentially via the external bus 12. If as a result of the interpretation, the instruction received is found to be an attribute setting instruction, it is broadcast to all the nodes 20 via the dispatch bus 11. If the instruction received is a primitive, one node 20 is selected and supplied with the primitive via the dispatch bus 11 distributing tasks.

The merge processor 30 is interconnected with the output end of each node 20 via the merge bus 31 and integrates calculation results sent from each node 20 to allow actual drawing in a display device (not shown) on the workstation.

Each node 20 consists of approximately the same circuit; Figure 2 shows its internal configuration in detail. The node 20 comprises a generic processor (MPU) 21, a memory 22, and an attribute processor 23, which are interconnected via an MPU bus 24 and a memory bus 25. For the purpose of the description, four nodes are used in Figure 1, but the number is not limited to this figure.

The attribute processor 23 further includes an input FIFO 51, a branch circuit 52, a TSL buffer/controller 53, and an output FIFO 54. The attribute processor 23 manages the TSL by toggling between two states depending on the primitive assigned: 'Locked' wherein a snapshot of the TSL is retained and 'Unlocked' wherein the lock state is cancelled. This is described below in detail. In addition, the attribute processor 23 includes a one bit register (not shown) which indicates this lock state.

The input FIFO 51 and output FIFO 54 have approximately the same configuration and operation. The input FIFO 51 inputs an instruction array via a dispatch bus 11 and transmits them in the order in which they were input. The output FIFO 54 inputs the results of the task that the node 20 has performed and transmits them to the merge processor 30 in the order that they have been input.

The branch circuit 52 interprets the content of an instruction distributed to the transmission end of the input FIFO 51. The circuit 52 transmits it to the TSL buffer/controller 53 unchanged if it is an attribute setting instruction, and retains it in the input FIFO 51 until the MPU 21 performs the next readout if it is a primitive.

The TSL buffer/controller 53 maintains TSL snapshots to be referenced when the MPU 21 processes a primitive and updates the TSL with the latest contents. The internal configuration and TSL management are described below in detail.

The MPU 21 is a generic microprocessor with a built-in cache which has a snoop mechanism and is provided in each node. The MPU 21 reads a primitive at the transmission end of the input FIFO 51 and executes drawing operation such as "transformation", "clipping", or "lighting" while referencing the TSL snapshot retained in the TSL buffer/controller 53. The results of this processing is sequentially transmitted to the output FIFO 54.

Memory 22 is provided in each node and used via the memory bus 25 when for example the contents of the TSL are pushed or popped.

Figure 3 shows the circuit configuration of said TSL buffer/controller 53 in detail. The TSL buffer/controller 53 comprises a first TSL buffer 61, a second TSL buffer 62, a TAG circuit 63, a leading zero counter (LZC) circuit 64, a comparator 65, a DMA control circuit 66, and five multiplexors (MUX) 71, 72, 73, 74, 75 which switch I/Os among the circuits. The TSL buffer/controller 53 can also receive attribute setting instructions from the input FIFO 51 via the attribute bus and communicate with each of the MPUs 21 and memories 22 via the MPU bus 24 and memory bus 25 under the control of the DMA control circuit 66.

Both the first TSL buffer 61 and the second TSL buffer 62 are addressable in units of one word (or several words) and attribute values for the same attribute type can be stored in the same address in the buffers 61, 62.

The first TSL buffer 61 updates an attribute value (hereinafter referred to as a current attribute value) by receiving from the MUXes 71, 72 an attribute setting instruction divided into an address part and a data (attribute value) part to write data into the corresponding address. The first TSL buffer 61 also receives an address from the DMA control circuit 66 via the MUX 71, reads the current attribute value stored in the address, and transmits it via the MUX 72.

The second TSL buffer 62 receives only the address part of the attribute setting instruction via a MUX 73 and outputs via a MUX 74 the attribute value stored in the address (hereinafter referred to as an old attribute value). The second TSL buffer 62 also receives an address from the DMA control circuit 66 via the MUX 73 and copies the attribute value sent via the MUX 74 to the address.

A comparator 65 has as two input ends the data part of the attribute setting instruction and the data output of the second TSL buffer 62 via the MUX 74, and its output end leads to a MUX 75. It compares the current and old attribute values, which are input signals. The output of the MUX 75 is 0 if the two values match, but the output is 1 if they do not match.

The TAG circuit 63 has a bit map configuration wherein one bit field (or several) is allotted to each address in the first TSL buffer 61 and second TSL buffer 62. It receives the output of the MUX 75 and writes the difference between the current and old attribute values onto the corresponding bit field. The changed part of the TSL is apparent from the TAG circuit 63 because 0 or 1 is written into each bit field depending upon whether or not the contents of the TSL on the corresponding addresses in the first TSL buffer 61 and second TSL buffer 62 match.

In addition, the TAG circuit 63 can receive an address signal from the DMA control circuit 66, in which instance the corresponding bit field is reset.

The Leading Zero Counter (LZC) circuit 64 sequentially retrieves from the TAG circuit 63 bit fields indicating "1" and informs the DMA control circuit 66 of the corresponding addresses, that is, the changed parts of the TSL.

The DMA control circuit 66 controls the direct transfer of data between the TSL buffers 61 and 62 without the interference of the MPU 21 and is connected to the first TSL buffer 61 via the MUXes 71, 72, to the second TSL buffer 62 via the MUXes 73, 74, and to the MPU 21 and memory 22 via the MPU bus 24 and memory bus 25, respectively.

The DMA control circuit 66 allows the MPU 21 to reference the contents of the second TSL buffer 62 while the attribute processor 23 is locked. It also causes the contents of the TSL to be copied from the first TSL buffer 61 to the second TSL buffer 62 or vice versa depending on the output of the LZC circuit 64 (that is, with respect to the changed parts of the TSL) when the attribute processor 23 is locked (the copying operation is described in detail later). In addition, during copying to the second TSL buffer 62, it sends addresses to be copied to the MPU bus 24 to invalidate the corresponding fields in the built-in cache of the MPU 21 using the snoop mechanism.

The DMA control circuit 66 also saves the contents of the first TSL buffer 61 in a stack on memory 22 via the memory bus 25 or recovers them from the stack to push or pop the TSL (this operation is described below).

The operation of the system of the preferred embodiment will now be described. The display list 40 shown in Figure 4 is sequentially sent from the workstation and sequentially processed by the graphic system 100.

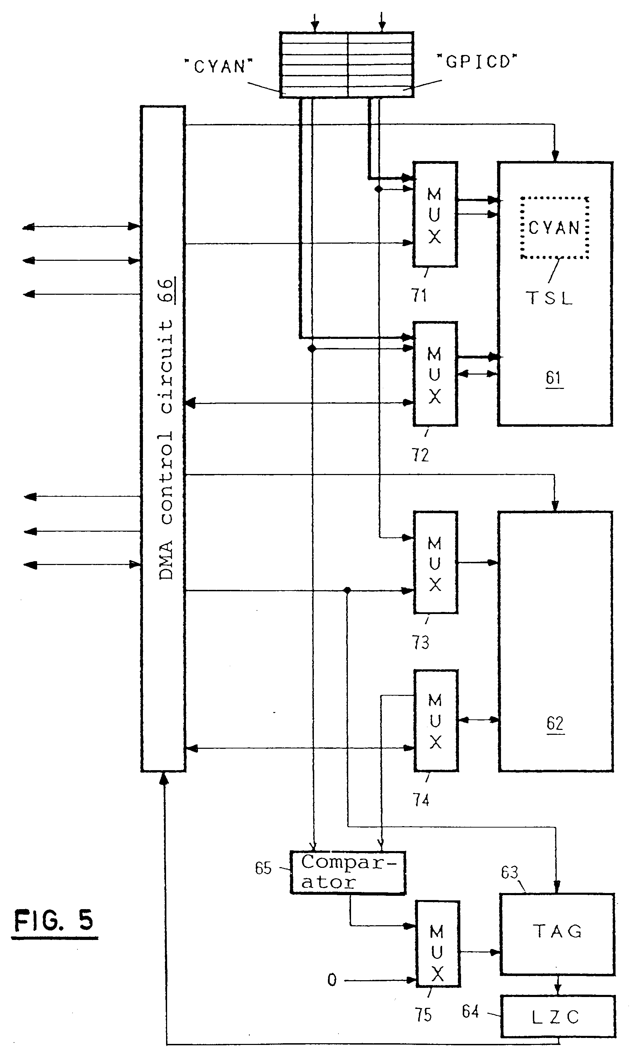

An instruction array is first passed to the dispatch processor 10. The first instruction is an attribute setting instruction (Set Interior Color Direct: CYAN) 41 which is broadcast to all the nodes 20 and temporarily stored in the input FIFO 51 in the attribute processor 23. The attribute setting instruction 41, transmitted from the input FIFO 51, is identified by the branch circuit 52 and directed to the TSL buffer/controller 53. The attribute setting instruction 41 is then divided into an address part "GPICD" and a data part "CYAN" which are input in to the first TSL buffer 61 via the MUXes 71 and 72 respectively. The attribute value "CYAN" is written into the predetermined address "GPICD" in the first TSL buffer 61. This process is shown in Figure 5.

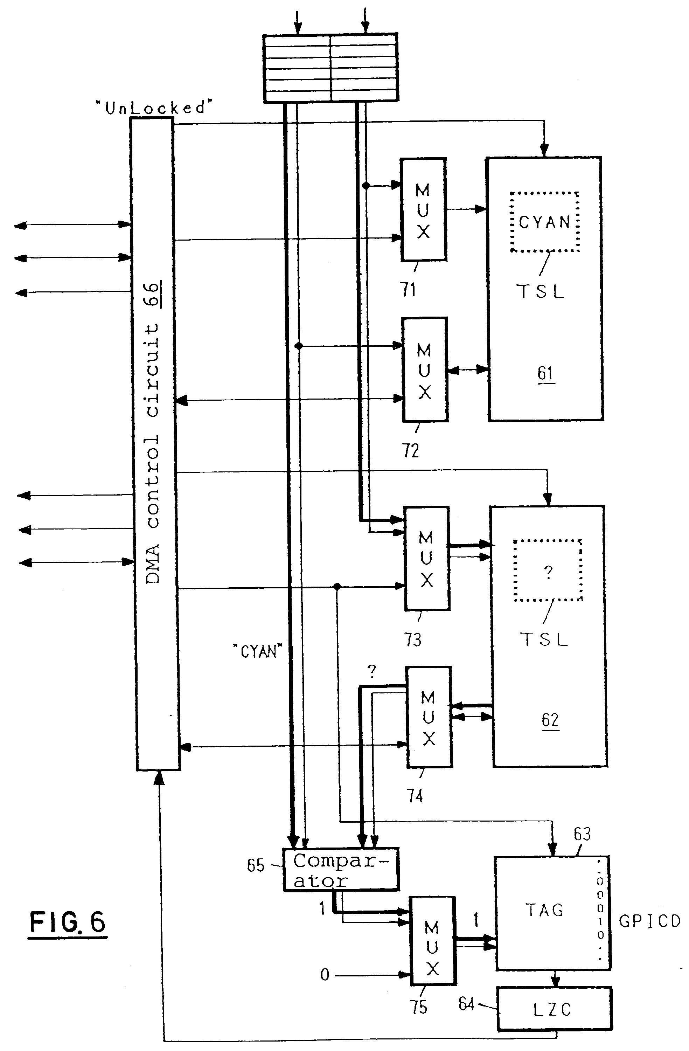

Additionally the address "GPICD" is also input to the second TSL buffer 62 via the MUX 73. The second TSL buffer 62 reads the old attribute value stored in the address "GPICD" and transmits it to the comparator 65 via the MUX 74. The comparator 65 compares the old attribute value with the current attribute value which it also receives as input. The output of the MUX 75 is "0" if both attribute values match but the output is "1" if they do not match. The output value is written into the bit field corresponding to the address "GPICD" in the TAG circuit 63. "1" is written into the bit field if the old attribute value is not "CYAN". This process is shown in Figure 6.

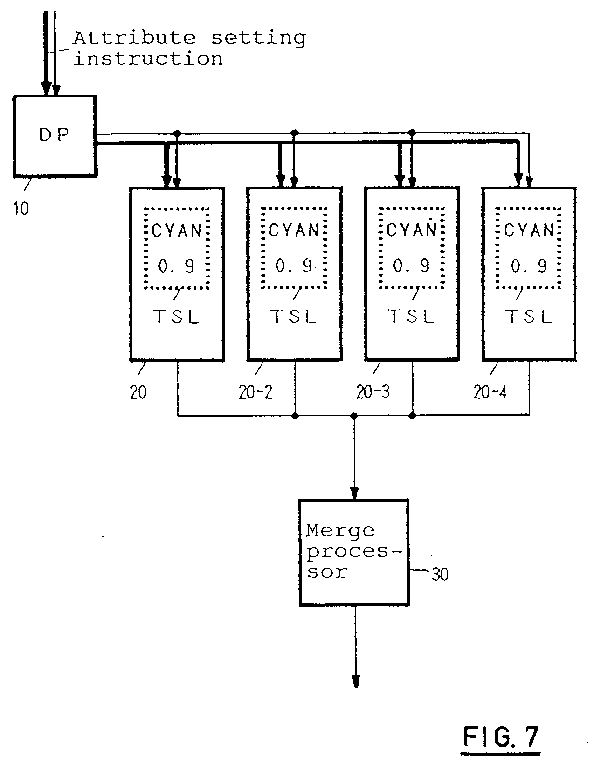

The second instruction is also an attribute setting instruction (Set Surface Properties: diff.coef. = 0.9) 42. Therefore, it is similarly broadcast to all the nodes 20. The attribute value "0.9" is written into a predetermined address "GPSPR" in the first TSL buffer 61 in each node 20. This process is shown in Figure 7.

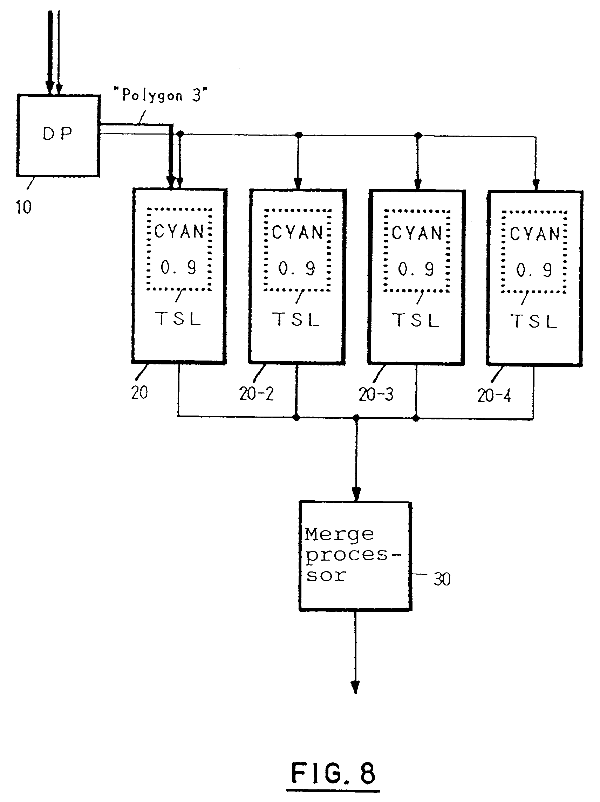

Next, the third instruction, a primitive (Polygon3) 43 is passed to the dispatch processor 10. The dispatch processor 10 checks the operation state of each node 20 and then allots the primitive to one node 20. This process is shown in Figure 8.

The attribute processor 23 of the node 20 to which the primitive 43 has been allotted must retain the snapshot of the TSL at that time so that the MPU 21 can reference it (that is, it must be locked with the contents of the TSL at that time). Therefore, the attribute processor 23 first checks whether or not it itself is locked when allotted a primitive. If already locked, it waits until the processing of the previous primitive is finished and the processor becomes unlocked.

Then, the LZC circuit 64 retrieves bits which are "1" from the TAG circuit 63 and sequentially transmits the corresponding addresses to the DMA control circuit 66. In the above case, the address "GPICD" is transmitted.

Then, the DMA control circuit 66 sends the address value "GPICD" to the first TSL buffer 61 via the MUX 71. The first TSL buffer 61 outputs the current attribute value "CYAN" stored in the address via the MUX 72.

The DMA control circuit 66 then sends the address "GPICD" and current attribute value "CYAN" to the second TSL buffer via the MUXes 73 and 74 respectively. The contents of the TSL are updated when the second TSL buffer 62 copies the attribute value to the address.

The DMA control circuit 66 also sends the TAG circuit 63 the address "GPICD" which is to be copied, and the TAG circuit 63 resets the value of the bit field corresponding to the address to "0".

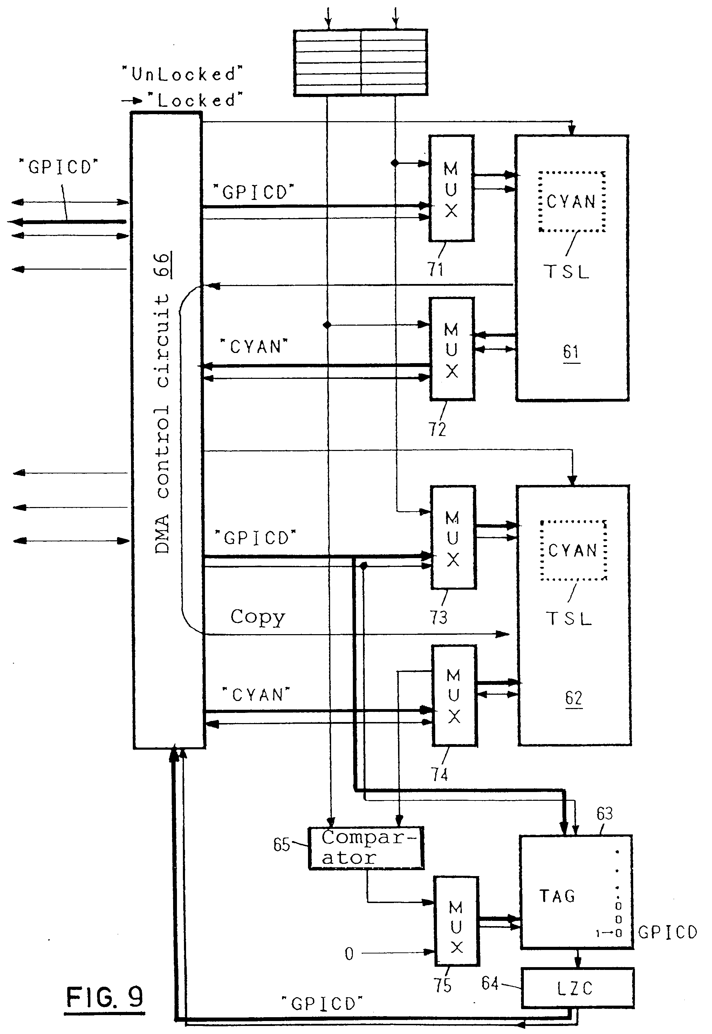

The DMA control circuit 66 also sends the MPU 21 the address "GPICD" which is copied when copying the attribute value "CYAN" to the second TSL buffer 62. The MPU 21 uses the snoop mechanism to invalidate the field in the built-in cache corresponding to the address. During subsequent primitive processing, only the modified parts of the TSL are re-transferred to the built-in cache of the MPU 21, minimizing the effect of updates. This process is shown in Figure 9.

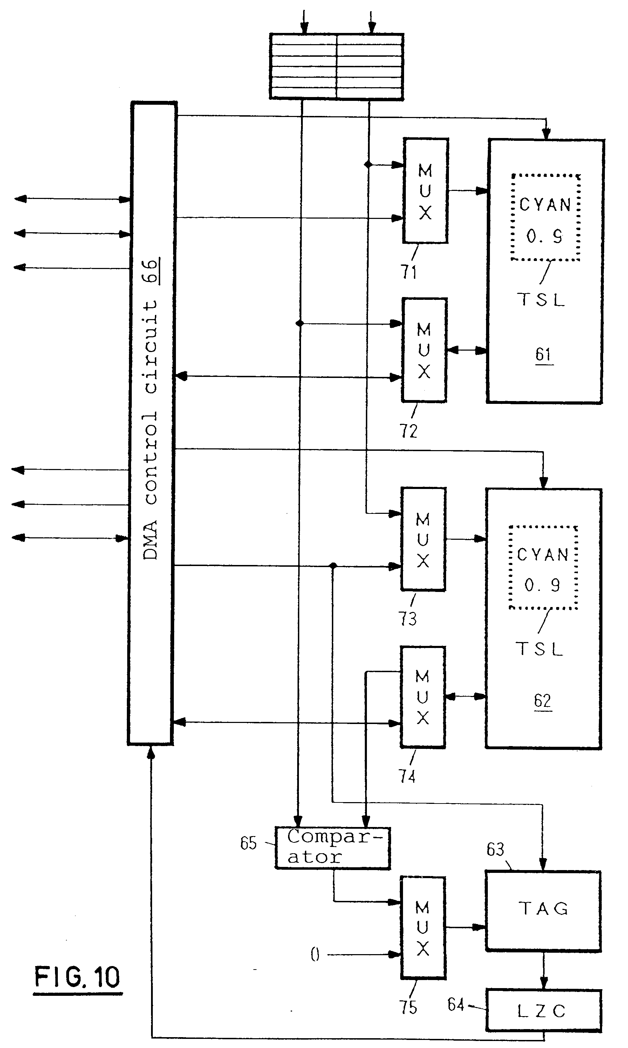

The above copy operation is repeated until all bits in the TAG circuit 63 become "0". Figure 10 shows that a similar update process has progressed up to the second instruction 42, that is, the attribute setting instruction "diff.coeff = 0.9". The attribute processor 23 then sets its own state to "locked" and second TSL buffer 62 maintains a snapshot of the TSL until the processing of the polygon3 43 is finished.

The polygon3 43 passes through the input FIFO 51, is identified by the branch circuit 52 and passed to the MPU 21 via the MPU bus 24. The MPU 21 processes the primitive 43 referencing the snapshot when needed.

The processing of the next attribute setting instruction is restarted only for the first TSL buffer 61 when the attribute processor 23 becomes locked. That is, the first TSL buffer 61 always retains the latest data in the TSL, while the second TSL buffer 62 retains a snapshot obtained when the attribute processor 23 is locked. This process is explained below in detail, using as an example a case in which the attribute setting instruction (Set Interior Color Direct: PINK), which is the fourth instruction, is dispatched while the MPU 21 of the node is processing the primitive 43.

As described above, the attribute setting instruction (Set Interior Color Direct: PINK) passes through the input FIFO 51 and branch circuit 52, is divided into the address part "GPICD" and attribute part "PINK", and is transmitted to the TSL buffer/controller 53.

The operation described above causes the attribute value "PINK" to overwrite the address "GPICD" in the first TSL buffer 61, in order to update the contents of the TSL. At this point, the old attribute value "CYAN" disappears.

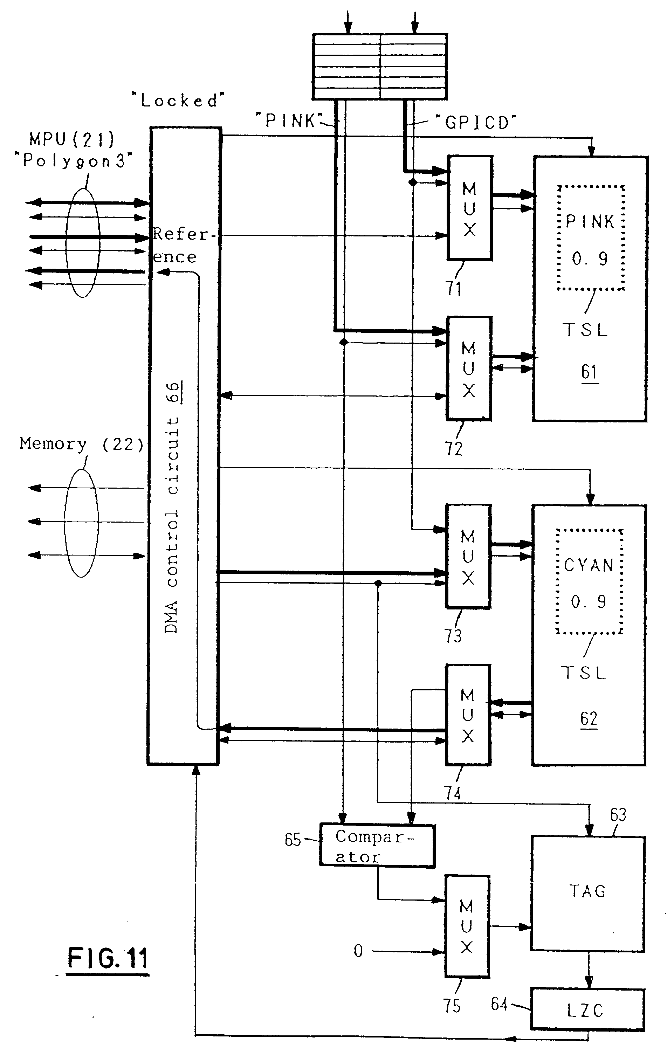

Since the attribute processor 23 is in the locked state, the DMA control circuit 66 does not immediately copy the latest attribute value "PINK" to the second TSL buffer 62. That is, the circuit 66 does not start copying until the MPU 21 finishes processing the polygon3 44 to cancel the locked state. This process is shown in Figure 11.

Suppose that the primitive (triangle strip3) 45, which is the fifth instruction, is passed to the dispatch processor 10 while one node 20 is processing the polygon3 43 (that is, during the locked state).

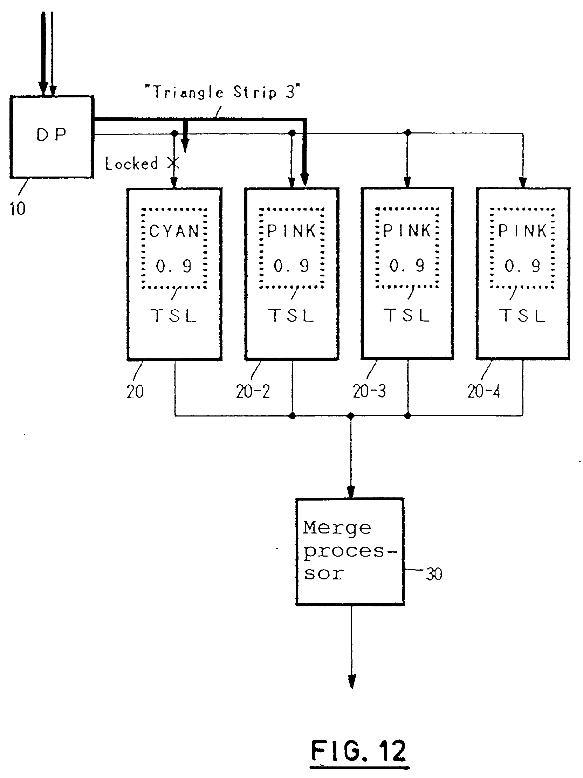

Since the node 20 is processing the polygon3 43, the dispatch processor 10 allots the triangle strip3 45 to another node 20-2. This process is shown in Figure 12.

In the node 20-2, the content of the TSL (Interior Color Direct) is already updated to "PINK". Therefore, the MPU 21-2 can perform drawing with reference to the latest data.

The TSL is pushed or popped by the DMA control device 66, saving the contents of the first TSL buffer 61 in a stack on memory 22 or recovering it from the stack. These operations can be implemented quickly by using DRAM fast page mode.

When the TSL is popped to recover it from memory 22, each bit field in the TAG circuit 63 is updated by comparing it with the contents of the second TSL buffer 62 and only the changed parts of the built-in cache of the MPU 21 are invalidated while the attribute processor 23 is locked, as in the processing of an attribute setting instruction. That is, only the re-written parts of the TSL can be re-transferred to minimize effects on the built-in cache.

Considering one side of the attribute processor 23 from the MPU 21 side, the MPU 21 communicates with the attribute processor 23 via the MPU bus 24. The memory 22 connected to the memory bus 25 can be implemented as an ordinary memory which uses the attribute processor, access to memory 22 being performed by the attribute processor 23. In addition, the input FIFO 51, output FIFO 54, and TSL buffer in the attribute processor 23 can be implemented on a memory map. However, only the second TSL buffer 62 which is actually referenced is sufficient in this context.

The total capacity is 8 Kbytes if the input FIFO, the output FIFO, and each TSL buffer have 1, 4, and 1.5 Kbytes, respectively. IBM's standard macros include the GRAM macro. This macro allows up to 16 Kbytes and requires about 100 K gate elements for a capacity of 8 Kbytes. On the other hand, for the conventional CMOS4 technology, up to 200 K gates can be implemented on one chip. Therefore, even the prior art allows the attribute processor according to this invention to be implemented on one chip.

As described above, according to the preferred embodiment of the present invention, the first TSL buffer always obtains the latest data for the TSL, while the second TSL buffer maintains a snapshot of the TSL taken during primitive processing. The difference between the current and previous contents of the TSL is determined for each word (or several words) of the TSL to retain the changed parts on bit fields in the TAG circuit and to copy only the contents of the changed parts to the second TSL buffer when needed so that the contents of the TSL can be updated. This allows much faster management of the TSL than copying the entire TSL.

The multiprocessor of the present invention assigns at any time the instantaneous value (snapshot) of a data set which is updated constantly by a sequential data array to element processors of a multiprocessor to execute efficiently and in parallel the instructions (for example, drawing instructions for a graphics system) corresponding to the snapshot.

In addition, during copying, a message for invalidating the changed parts in the built-in cache can be sent to the MPU to improve the effect of caching the TSL.

The attribute processor according to the preferred embodiment of this invention can be implemented on one chip and operated at a high speed.

That is, fast TSL, management according to this invention allows programs written using the PHIGS to be processed quickly and in parallel on a multiprocessor comprising high performance generic microprocessors with a built-in cache. For example, IBM has developed graPHIGS as a three-dimensional graphics interface which can support large scale or personal computers. It is clear that calculational capability increases in proportion to the number of nodes if the instruction array sent from graPHIGS is processed by a multiprocessor using generic processors.

## Claims

1. A multiprocessor system having a plurality of nodes (20) arranged to execute allotted tasks in parallel, the system comprising:
a distribution means (10) for receiving sequentially data sets and tasks, for broadcasting data sets to all of the nodes, and for allotting a task to one of the nodes for processing;
an integration means (30) for integrating the results of processing by each node;
each node being in a locked state during processing of a task, and comprising:
a first temporary storage means (61) for receiving and writing each item of data sent by the distribution means (10) at a corresponding address;
a second temporary storage means (62) having the same set of addresses as the first temporary storage means (61) and retaining the instantaneous value of the data set at the time the node entered its locked state;
a comparison means (65) for comparing the data stored in the corresponding addresses in the first and second temporary storage means (61, 62) to detect a difference, and a third storage means (63) for storing the addresses at which a difference exists;
a task processing means (21) for processing the allotted task with reference to the data set stored in the second storage means (62) and driving the node into an unlocked state when the processing of the task is finished;
a storage control means (66) for controlling the referencing of the task processing means (21) to the second temporary storage means (62), and with reference to the third storage device during the unlocked state copying the data set at an address in the first temporary storage means to the corresponding address in the second temporary storage means for each address where a difference existed.

2. A multiprocessor system as claimed in Claim 1 wherein in copying a data set, the storage control means (66) sends the data set's address to the task processing means (21), and the task processing means (21) has a built-in cache memory and invalidates the area of the cache memory that corresponds to the address received from the storage control means (66).

3. A method for controlling a multiprocessor system having a plurality of nodes (20) arranged to execute allotted tasks in parallel, the method comprising the steps of:
broadcasting, via a distribution means (10), a data set received by the multiprocessor system to each node;
employing a first temporary storage means (61) in each node (20) to write said data set into a corresponding address;
comparing said data set with the data set stored in a corresponding address of a second temporary storage means (62) in each node to detect any difference,
associating said difference with the address and storing it in a third storage means (63) in each node;
employing the distribution means to receive tasks and to allot a task to one of the nodes (20);
in response to the allotment of the task, causing the allotted node to read from the third storage means (63) the addresses with the difference detected and to copy the data set stored in each such address in the first temporary storage means (61) to the corresponding address in the second temporary storage means (62);
after copying all the addresses with a difference detected is completed, driving the node into a locked state;
in response to the locked state, employing a task processing means (21) to process the task with reference to the second temporary storage means (62);
driving the node into an unlocked state when the task processing means finishes processing the task; and
employing an integration means (30) to integrate the results of processing by each node.

4. A method as claimed in Claim 3 wherein if a node receives a data set from the distribution means whilst in the locked state, the first temporary storage means (61) is employed to write said data set into the corresponding address, said data set is compared with the data set stored in the corresponding address in the second temporary storage means (62) to detect a difference, and said difference is stored with the address in the third storage means, but the data set is not copied from the first to second temporary storage means until the node has been driven into the unlocked state.

5. A method as claimed in Claim 3 or Claim 4 wherein the task processing means (21) has a built-in cache memory, and the method comprises the further steps of:
when a data set is copied, sending the data set's address to the task processing means (21); and
invalidating the area of the cache memory that corresponds to the address received by the task processing means (21).
